# EUROPEAN PATENT APPLICATION

(11) **EP 4 404 086 A1**
(43) Date of publication of application: **24.07.2024**
(21) Application number: 22869972.4
(22) Date of filing: 13.09.2022
(51) Int. Cl.: G06F 21/32, G06F 21/33, G06F 21/62, G06F 21/64

(54) **INFORMATION MANAGEMENT SYSTEM, AUTHENTICATION DEVICE, AND PERSONAL INFORMATION SERVER**

(30) Priority: 17.09.2021 JP 2021151866
(71) Applicant: Kabushiki Kaisha Toshiba, Minato-ku Tokyo 105-0023 (JP); Toshiba Infrastructure Systems & Solutions Corporation, Kawasaki-shi, Kanagawa 212-0013 (JP)
(72) Inventor: FUKUDA, Aki, Kawasaki-shi, Kanagawa 212-0013 (JP)
(74) Representative: Horn Kleimann Waitzhofer Schmid-Dreyer Patent- und Rechtsanwälte PartG mbB
(86) International application number: PCT/JP2022/034254
(87) International publication number: WO 2023/042825

(57) **Abstract**

Provided are an information management system, an authentication device, and a personal information server that are capable of safely managing information to be managed for each individual without necessitating a complicated operation.

According to an embodiment, the information management system includes an authentication device and a personal information server. The authentication device includes a sensor, a memory, an interface, and a first processor. The personal information server includes a communication unit, a data memory, and a second processor. The sensor acquires biological information of a person. The memory stores biological information of a holder. The interface is connected to a terminal device. The first processor outputs information indicating a location of the personal information server to the terminal device if a biometric verification between the biological information acquired by the sensor and the biological information stored in the memory is successful. The communication unit communicates with the terminal device. The data memory stores personal information of a holder of the authentication device. The second processor supplies the personal information of the holder of the authentication device stored in the data memory to the terminal device in response to a request from the terminal device to which the authentication device is connected.

## Description

### FIELD

Embodiments described herein relate generally to an information management system, an authentication device, and a personal information server.

### BACKGROUND

In recent years, a self-sovereign identity system has been considered. A self-sovereign identity system is a system based on the concept of an individual managing data from conventional centralized data management. A self-sovereign identity system is envisioned to receive and provide personal qualification information using a mobile device such as a smartphone or a personal computer (PC).

In the conventional centralized system, the platform provider collectively manages data; thus, there is a large risk in terms of privacy and data protection such as the leakage of personal information of a large number of people or the occurrence of large-scale unauthorized use of data by a third person when there is a security attack to the collectively managed data. In contrast, in a self-sovereign identity system, it is expected that the risk related to data protection is reduced by distributed information management, data handling by an individual, and one-to-one data transfer to and from a reliable person.

However, individuals such as elderly people are often unfamiliar with the operation of information devices such as a smartphone and a PC. Individuals who are unfamiliar with the use of such information devices may have difficulty managing their own data with a self-sovereign identity system. Thus, in order to implement a self-sovereign identity system, an operation using a user interface or the like that is easy to understand is necessary. Also, in a self-sovereign identity system, a user himself/herself needs to manage and store information such as a secret key safely. If it is assumed that a user himself/herself safely stores information, there is a concern about, for example, the leakage of a key due to an attack by a computer virus or the like in a smartphone or a PC possessed by the user.

### CITATION LIST

### PATENT LITERATURE

Patent Literature 1: Jpn. Pat. Appln. KOKAI Publication No. 2001-312477

### SUMMARY

### TECHNICAL PROBLEM

To solve the above problem, there is provided an information management system, an authentication device, and a personal information server that are capable of safely managing information to be managed for each individual without necessitating a complicated operation.

### SOLUTION TO PROBLEM

According to an embodiment, an information management system includes an authentication device and a personal information server. The authentication device includes a sensor, a memory, an interface, and a first processor. The personal information server includes a communication unit, a data memory, and a second processor. The sensor acquires biological information of a person. The memory stores biological information of a holder. The interface is connected to a terminal device. The first processor outputs information indicating a location of the personal information server to the terminal device if a biometric verification between the biological information acquired by the sensor and the biological information stored in the memory is successful. The communication unit communicates with the terminal device. The data memory stores personal information of a holder of the authentication device. The second processor supplies the personal information of the holder of the authentication device stored in the data memory to the terminal device in response to a request from the terminal device to which the authentication device is connected.

### BRIEF DESCRIPTION OF THE DRAWINGS

FIG. 1 is a diagram showing an example of a system configuration for issuing an IC card as an authentication device used in an information management system according to an embodiment.
FIG. 2 is a block diagram showing an example of a configuration of an IC card as an authentication device used in the information management system according to an embodiment.
FIG. 3 is a block diagram showing an example of a configuration of a registration apparatus for issuing an IC card as an authentication device used in the information management system according to an embodiment.
FIG. 4 is a sequence diagram for explaining an issuance process for issuing an IC card as an authentication device used in the information management system according to an embodiment.
FIG. 5 is a diagram showing an example of a system configuration for the information management system according to an embodiment to provide information on a holder of an IC card as an authentication device.
FIG. 6 is a block diagram showing an example of a configuration of a personal information server that is a repository of a holder of an IC card in the information management system according to an embodiment.
FIG. 7 is a sequence diagram for explaining authentication procedures of an IC card, a personal information server, and a counter terminal in the information management system according to an embodiment.
FIG. 8 is a sequence diagram for explaining a process in which the information management system according to an embodiment provides the counter terminal with information on a holder of an IC card stored in the personal information server.
FIG. 9 is a sequence diagram for explaining a process in which the information management system according to an embodiment stores the information from the counter terminal in the personal information server, which is a repository of a holder of an IC card.

### DETAILED DESCRIPTION

Hereinafter, embodiments will be described with reference to the drawings.

First, a procedure for issuing (registering) an authentication device used in an information management system according to an embodiment will be described.

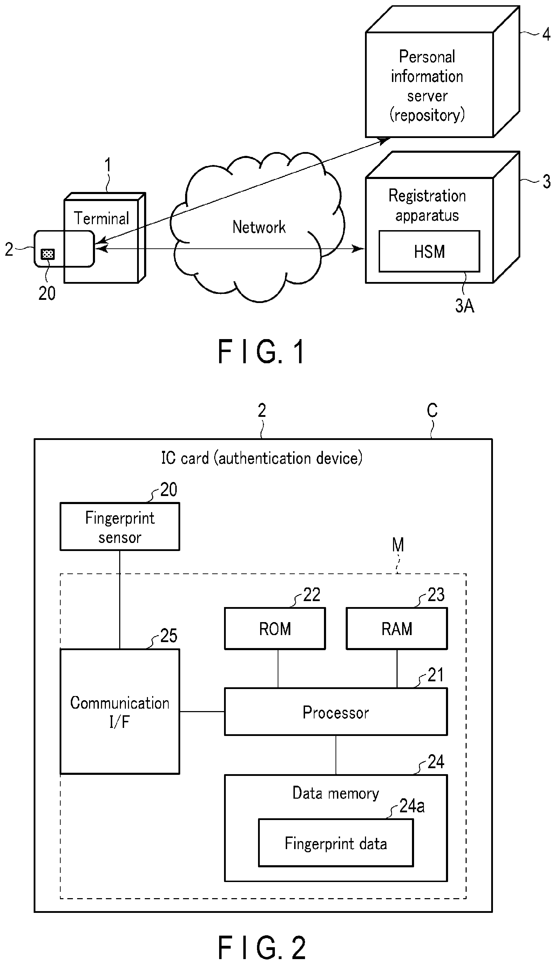

FIG. 1 is a diagram schematically showing an example of a system configuration for issuing (registering) an IC card 2 as an authentication device that is usable in an information management system according to an embodiment.

In the configuration example shown in FIG. 1, the information management system includes a terminal (user terminal) 1, an IC card 2, a registration apparatus 3, a personal information server 4, etc.

The IC card 2 is an example of an authentication device having a function of performing biometric authentication. The IC card 2 as an authentication device is issued to each individual, and has a function of authenticating the holder using biological information.

The IC card 2 as an authentication device includes a biometric sensor 20 for acquiring biological information as authentication information acquired from a person. In the embodiment, descriptions will be provided assuming that the IC card 2 as an authentication device is a fingerprint authentication card (a fingerprint sensor card) having, as the biometric sensor 20, a fingerprint sensor that reads a fingerprint, which is an example of biological information. The IC card 2 performs fingerprint authentication (biometric authentication) as identity verification by collating a fingerprint read by the fingerprint sensor (biometric sensor) 20 with a fingerprint of a holder (registrant) registered in advance in a memory in the IC card 2.

The authentication device according to the embodiment is not limited to the fingerprint sensor card which is an IC card provided with a fingerprint sensor. For example, the authentication device may be a portable electronic device that performs biometric authentication using biological information other than fingerprints, or may be hardware such as a smartphone.

In the embodiment, it is assumed that the holder of the IC card 2 has a personal information server 4 for managing information such as personal information and qualification information of the holder. The personal information server 4 is called a repository. The personal information server 4 constitutes a self-sovereign identity system that manages information in a distributed manner for each individual and allows each individual to handle data. The self-sovereign identity system differs from a centralized data management system which makes a platform provider collectively manage data, and securely transfers data such as personal qualification information managed in a distributed manner by the personal information server 4 of each individual by utilizing personal authentication via an authentication device, thereby improving privacy protection of the data.

The personal information server 4 is provided for each holder of the IC card 2 who is a target person who manages personal information such as qualification information. The personal information server 4 stores personal information such as qualification information as information on the holder of the IC card 2. The personal information server 4 has a function of securely communicating with the IC card 2 through mutual authentication with the IC card 2 as an authentication device. The personal information server 4, which is a repository of the holder of the IC card 2, is connected to the network. The location of the personal information server (the location of the server) is indicated by an address over the network such as a URL.

The terminal 1 is an information processing device that includes a card interface for communicating with the IC card 2 as an authentication device and a network interface for communicating with the registration apparatus 3. The terminal 1 may be any terminal as long as it can mediate communication between the IC card and the registration apparatus 3. The terminal 1 is not limited to a device that includes a card interface (card reader-writer) that communicates with the IC card 2, and may be a device that includes an interface for connecting to a card reader-writer as an external device. The terminal 1 is, for example, a user terminal such as a smartphone, tablet PC, personal computer (PC), or the like operated by the user.

The registration apparatus 3 is an apparatus that functions to communicate with an external apparatus via a network and manages a hardware security module (HSM) 3A in which personal information is registered. The registration apparatus 3 is, for example, a server operated by a public organization, and manages the HSM 3A that stores personal information including biological (fingerprint) information of each individual managed by the public organization and a URL of a repository (a location of a server such as an address).

The HSM 3A is a device that securely stores information. In the embodiment, the HSM 3A has a function of performing fingerprint verification (biometric authentication) between the stored registered fingerprint information and the fingerprint information provided via the terminal 1 and the registration apparatus 3 and acquired by the IC card 2. The HSM 3A further has a function of generating a key pair consisting of a secret key and a public key and securely storing the secret key.

Next, a configuration of a control system in the IC card 2 as an authentication device according to an embodiment will be described.

FIG. 2 is a block diagram showing an example of a configuration of the IC card 2 as an authentication device according to an embodiment.

The IC card 2 is an authentication device that is activated (becomes operable) by power supplied from an external device. The IC card 2 is also referred to as a smart card. As shown in FIG. 2, the IC card 2 has a main body C. The main body C is made of plastic or the like and formed in a card shape. A control module M is built in the main body C of the IC card 2. The control module M is integrally formed in a state where a communication interface is connected to one or more IC chips.

In the configuration example shown in FIG. 2, the control module M has a processor 21, a ROM 22, a RAM 23, a data memory 24, and a communication interface 25. In the main body C of the IC card 2, the control module M is connected to a display 26 and the fingerprint sensor 20 as a biometric sensor.

The processor 21 includes a circuit that executes various types of processing. The processor 21 is, for example, a central processing unit (CPU). The processor 21 controls the entire IC card 2. The processor 21 implements various processing functions by executing the programs stored in the ROM 22 or the data memory 24. However, some or all of the various functions executed by the processor 21, which will be described later, may be implemented by a hardware circuit.

The ROM 22 is a non-volatile memory that functions as a program memory. A control program, control data, and the like are stored in advance in the ROM 22. The ROM 22 is incorporated into the IC card 2 in a state where a control program, control data, and the like are stored in the ROM 22 in a manufacturing stage. The control program and the control data stored in the ROM 22 are incorporated in advance according to the specifications of the IC card 2. For example, a program for causing the processor 21 to execute processing corresponding to a command received from an external device (card reader-writer) is stored in the ROM 22.

The RAM 23 is a volatile memory that functions as a working memory. The RAM 23 also functions as a buffer for temporarily storing data that is being processed by the processor 21, etc. For example, the RAM 23 functions as a communication buffer that temporarily stores data transmitted and received to and from an external device via the communication interface 25.

The data memory 24 is a non-volatile memory in which data can be written and rewritten. The data memory 24 is composed of, for example, an electrically erasable programmable read only memory (EEPROM (registered trademark)) or the like. A program and various kinds of data according to the operational use of the IC card 2 are written in the data memory 24. A program file, a data file, etc., are defined in the data memory 24, and a control program and various kinds of data are written in these files. Some or all areas of the data memory 24 are tamper-resistant, and data can be stored securely. For example, information such as key information is stored in a storage area of the data memory 24 that can securely store data.

The data memory 24 has a storage area 24a for storing biological information of the holder of the IC card 2. If the IC card 2 is a fingerprint sensor card for performing biometric authentication using a fingerprint, fingerprint information as biological information of the user as the holder is written in the storage area 24a of the IC card 2. In the embodiment described below, it is assumed that the user holds the IC card 2 in a state where fingerprint information as biological information of the holder is written in the storage area 24a of the data memory 24.

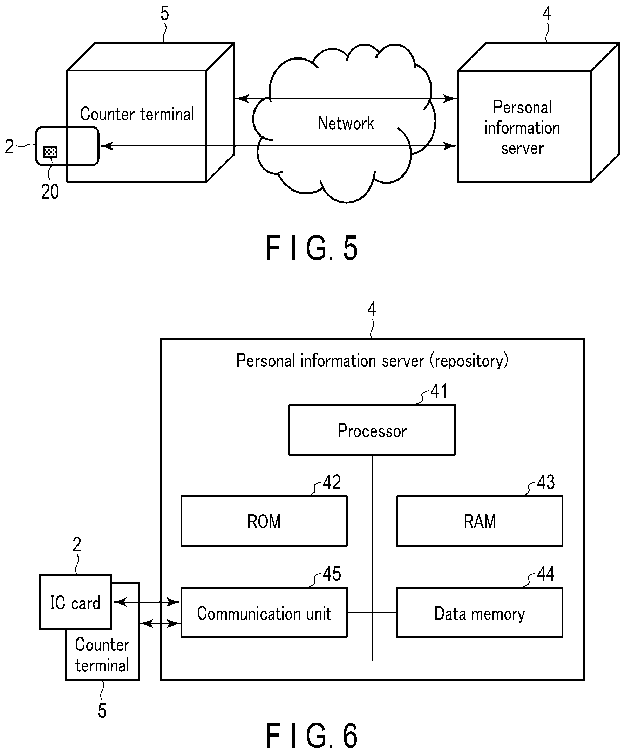

The communication interface 25 includes a communication control unit and an interface unit, and constitutes a communication unit. The communication interface 25 is an interface for communication connection with the card interfaces (card reader-writers) included in the terminal devices such as the terminal 1 and a counter terminal 5 (see FIG. 5) or with the card reader-writers connected to the terminal devices via an interface. The communication interface 25 implements a communication function via a communication method corresponding to a card interface included in the terminal devices (the terminal 1 and the counter terminal 5). Further, the communication interface 25 may be formed to support a plurality of communication methods (e.g., contact communication and non-contact communication).

If the IC card 2 is realized as a non-contact IC card, the communication interface 25 forms a communication unit that communicates in a non-contact (wireless) manner with the card interfaces included in the terminal devices or the card reader-writers (RWs) connected to the terminal devices via an interface. In this case, the communication interface 25 includes an antenna for transmitting and receiving radio waves, and is formed of, for example, a modulation circuit for generating radio waves to be transmitted from the antenna and a demodulation circuit for generating a signal from radio waves received by the antenna.

If the IC card 2 is realized as a contact IC card, the communication interface 25 forms a communication unit that communicates in a contact manner with the card interfaces included in the terminal devices or the card RW connected to the terminal devices via an interface. In this case, the communication interface 25 includes a contact portion that physically and electrically contacts a contact portion provided in the card RW, and is formed of, for example, a communication control circuit that controls transmission and reception of a signal via the contact portion.

The biometric sensor 20 is an example of an authentication information acquisition unit that acquires authentication information. The biometric sensor 20 is a sensor that acquires biological information of a person as authentication information used for an authentication process. In the embodiment, the biometric sensor 20 is a fingerprint sensor that reads fingerprint information (a fingerprint image) of a user. The fingerprint sensor 20 as a biometric sensor is provided so that a sensor for reading a fingerprint is exposed on the surface of the card main body C, and reads a fingerprint of a finger of a person held over the exposed sensor portion. Fingerprint verification is performed by collating the fingerprint information read by the fingerprint sensor 20 with the fingerprint information stored in the storage area 24a of the data memory 24.

The biometric sensor 20 is not limited to a fingerprint sensor, and may be a sensor that acquires biological information other than a fingerprint (such as a palm print, a vein, an iris, etc.). If the IC card 2 is provided with a sensor for acquiring biological information other than a fingerprint, the IC card 2 may be provided with a function of performing biometric authentication corresponding to the biological information acquired by the sensor (e.g., an IC chip that executes palm print verification, vein verification, iris verification, etc.).

Next, a configuration of the registration apparatus 3 for issuing (registering) the IC card 2 as an authentication device used in the information management system according to an embodiment will be described.

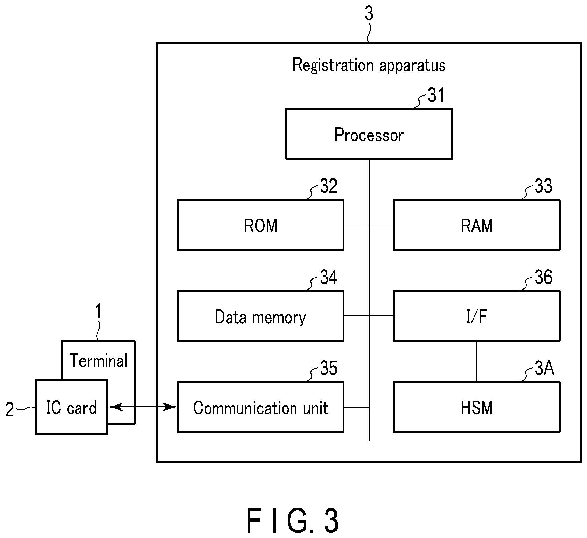

FIG. 3 is a block diagram showing an example of a configuration of the registration apparatus 3 in an issuing system according to an embodiment.

As shown in FIG. 3, the registration apparatus 3 has a processor 31, a ROM 32, a RAM 33, a data memory 34, a communication unit 35, and an interface 36.

The processor 31 executes various kinds of processing by executing programs. The processor 31 is, for example, a central processing unit (CPU). The processor 31 is connected to each unit in the registration apparatus 3 via a system bus and transmits and receives data to and from each unit. The processor 31 performs operations such as control and data processing in the registration apparatus 3 in cooperation with the ROM 32 and the RAM 33.

The ROM (read only memory) 32 is a non-volatile memory that stores a program, control data, and the like for implementing basic operations of the registration apparatus 3 .

The RAM (random access memory) 33 is a volatile memory that temporarily stores data. The RAM 33 functions as a working memory if the processor 31 executes a program.

The data memory 34 is a storage unit for storing various kinds of data. The data memory 34 is formed of a non-volatile memory in which data can be rewritten. For example, the data memory 34 stores an OS program, an application program, operation setting information, and the like.

The communication unit 35 is a communication interface for communicating with an external device. The communication unit 35 may perform wireless communication or wired communication. In the embodiment, the communication unit 35 communicates with the terminal 1 used by a user via a wide-area network such as the Internet. Through the communication unit 35, the processor 31 executes secure communication with the IC card 2 via the terminal 1.

The interface 36 is an interface for accessing the HSM 3A. The interface 36 may be any interface that complies with the interface standard of the HSM 3A. The HSM 3A may be a device connected to the registration apparatus 3 connected via the interface 36.

The HSM 3A securely stores information including the fingerprint information as biological information of the holder of the IC card 2 and the address (URL) of the repository. The HSM 3A also has functions of performing biometric verification between biological information input from the registration apparatus 3 and stored biological information and outputting the biometric verification result. The HSM 3A can securely implement biometric verification since it can perform biometric verification without outputting the stored biological information to the outside.

Next, an issuing process for issuing (registering) the IC card 2 used in the information management system according to an embodiment will be described.

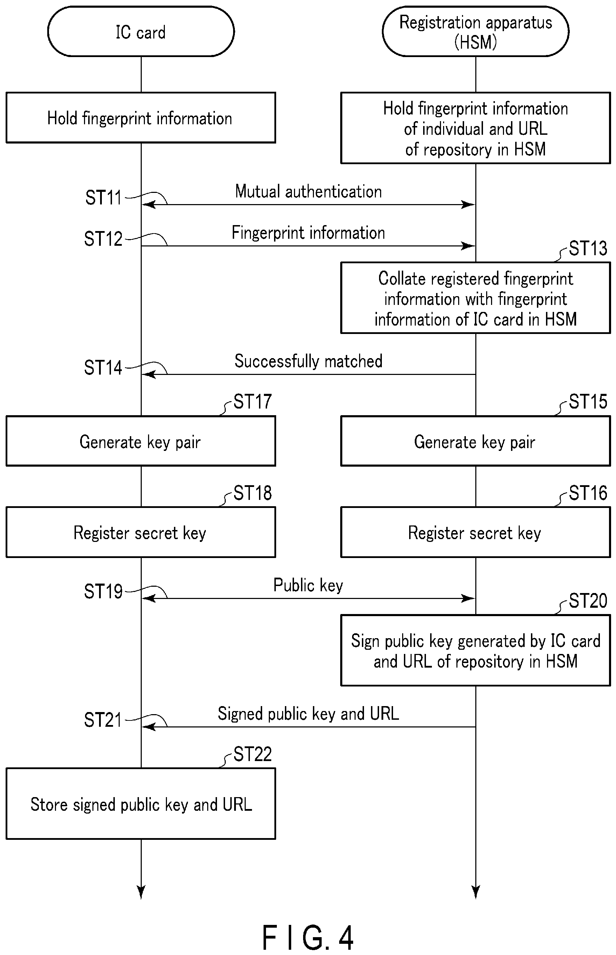

FIG. 4 is a sequence diagram for explaining an operation example of an issuing process of issuing (registering) an IC card 2 that serves as an authentication device, as the IC card 2 usable in the information management system.

In the operation example shown in FIG. 4, it is assumed as prerequisites that the IC card 2 stores the fingerprint information of the holder of the IC card 2 and that the HSM 3A stores the fingerprint information of the holder of the IC card 2 and the URL of the repository. The IC card 2 and the HSM 3A are assumed to have functions of securely communicating with each other via the terminal 1 and the registration apparatus 3.

The processor 21 of the IC card 2 connects to the terminal 1 via the communication I/F 25, and communicates with the registration apparatus 3 via the network communication function of the terminal 1. When the communication state with the registration apparatus 3 is established via the terminal 1, the processor 21 of the IC card 2 executes mutual authentication between the IC card 2 and the HSM 3A (ST11).

When the mutual authentication between the IC card 2 and the HSM 3A is successful, the processor 21 of the IC card 2 transmits the fingerprint information of the holder of the IC card 2 stored in the storage area 24a of the data memory 24 to the HSM 3A of the registration apparatus 3 (ST12). The HSM 3A performs fingerprint verification between the fingerprint information acquired from the IC card 2 and the stored registered fingerprint information (ST13). If the fingerprint information acquired from the IC card 2 successfully matches the registered fingerprint information, the HSM 3A notifies the IC card 2 of the successful matching via the registration apparatus 3 and the terminal 1 (ST14).

After the fingerprint verification of the fingerprint information acquired from the IC card 2 is successful, the HSM 3A generates a key pair consisting of a secret key and a public key (ST15). When the key pair is generated, the HSM 3A securely stores (registers) the generated secret key (ST16). After registering the secret key, the HSM 3A transmits the public key to the IC card 2 (ST19).

On the other hand, if the processor 21 of the IC card 2 receives a notification that the fingerprint verification of the fingerprint read by the fingerprint sensor 20 in the HSM 3A is successful, the processor 21 generates a key pair consisting of a secret key and a public key (ST17). When the key pair is generated, the processor 21 stores (registers) the generated secret key in a secure storage area of the data memory 24 (ST18). After storing the secret key, the processor 21 transmits a public key corresponding to the stored secret key to the HSM 3A (ST19).

That is, each of the IC card 2 and the HSM 3A, which have succeeded in mutual authentication, generates a key pair consisting of a secret key and a public key if the fingerprint information acquired by the IC card 2 and the fingerprint information stored by the HSM 3A successfully match each other. The IC card 2 and the HSM 3A store the secret keys generated by themselves and exchange public keys corresponding to the secret keys. The IC card 2 and the HSM 3A can encrypt and verify the data by using the key pairs generated by the IC card 2 and the HSM 3A themselves.

When the HSM 3A obtains the public key generated by the IC card 2, the HSM 3A digitally signs the public key generated by the IC card 2 and the URL of the repository of the holder of the IC card 2 by using the private key (ST20). When the digitally signed public key and URL are generated, the HSM 3A transmits the generated digitally signed public key and URL to the IC card 2 (ST21).

The IC card 2 receives the digitally signed public key and URL generated by the HSM 3A via the communication interface 25. If the processor 21 of the IC card 2 receives the digitally signed public key and URL from the HSM 3A, the processor 21 stores the digitally signed public key and URL from the HSM 3A in the data memory 24 (ST22). The processor 21 of the IC card 2 verifies the public key generated by the IC card 2 and digitally signed by the HSM 3A, thereby verifying the correctness of the URL (the URL of the repository of the holder) received together with the public key generated by the IC card 2 itself.

Next, a process of providing the qualification information stored in the personal information server 4, which is a repository of the holder of the IC card 2, in the information management system according to an embodiment and a process of registering the qualification information in the personal information server 4 in the information management system according to an embodiment will be described.

FIG. 5 is a diagram schematically showing an example of a system configuration for providing information held by the personal information server 4 using the IC card 2 in the information management system according to an embodiment.

In the configuration example shown in FIG. 5, the information management system has the IC card 2, the personal information server 4, the counter terminal 5, and the like.

As shown in FIG. 2, the IC card 2 is configured to have the fingerprint sensor 20 as a biometric sensor. The IC card 2 shown in FIG. 5 is an example of an authentication device issued according to the issuing procedures performed using the registration apparatus 3. The IC card 2 is an authentication device that has a fingerprint authentication (fingerprint verification) function as biometric authentication for verifying the holder of the IC card 2, and holds information indicating the personal information server 4, which is a repository of the holder of the IC card 2.

The counter terminal 5 is an information processing device that includes a card interface for communicating with the IC card 2 as an authentication device and a network interface for communicating with the personal information server 4 via a network. The counter terminal 5 has a function of mediating communication between the IC card 2 and the personal information server 4. The counter terminal 5 connects the IC card 2 presented by a user to the card interface, and acquires information such as qualification information of the holder of the IC card 2 held by the personal information server 4. For example, the counter terminal 5 acquires the qualification information of the holder of the IC card 2 held by the personal information server 4, and performs procedures for various services for the person based on the acquired qualification information. The counter terminal 5 may be configured to perform a procedure for registering (writing) information such as qualification information of the holder of the IC card 2 in the personal information server 4. For example, the counter terminal 5 requests that the qualification information of the holder of the IC card 2 be written in the personal information server 4, which is a repository of the person.

The personal information server 4 is a repository of the holder of the IC card 2. As described above, the personal information server 4 manages information (e.g., personal information such as qualification information) of the holder of the IC card 2. The personal information server 4 provides the information on the holder of the IC card 2 stored therein in response to a request from the terminal device to which the IC card 2 is connected. Also, the personal information server 4 registers (stores) information such as new qualification information as the information on the holder of the IC card 2 in response to a request from the terminal device to which the IC card 2 is connected.

FIG. 6 is a block diagram showing an example of a configuration of the personal information server 4 in the information management system according to an embodiment.

As shown in FIG. 6, the personal information server 4 has a processor 41, a ROM 42, a RAM 43, a data memory 44, and a communication unit 45.

The processor 31 executes various kinds of processing by executing programs. The processor 31 is, for example, a central processing unit (CPU). The processor 31 transmits and receives data to and from each unit of the personal information server 4 via a system bus. The processor 41 performs operations such as control and data processing in the personal information server 4 in cooperation with the ROM 42 and the RAM 43.

The ROM (read only memory) 42 is a non-volatile memory that stores a program, control data, and the like for implementing basic operations of the personal information server 4.

The RAM (random access memory) 43 is a volatile memory that temporarily stores data. The RAM 43 functions as a working memory if the processor 41 executes a program.

The data memory 44 is a storage unit for storing various kinds of data. The data memory 44 is formed of a non-volatile memory in which data can be rewritten. For example, the data memory 44 stores an OS program, an application program, operation setting information, and the like.

The communication unit 45 is a communication interface for communicating with an external device. The communication unit 45 may perform wireless communication or wired communication. In the embodiment, the communication unit 45 communicates with the counter terminal 5 via a wide-area network such as the Internet. Through the communication unit 45, the processor 41 executes secure communication with the IC card 2 via the counter terminal 5 .

Next, an information providing process for providing information held by the personal information server 4 using the IC card 2 in the information management system according to an embodiment will be described.

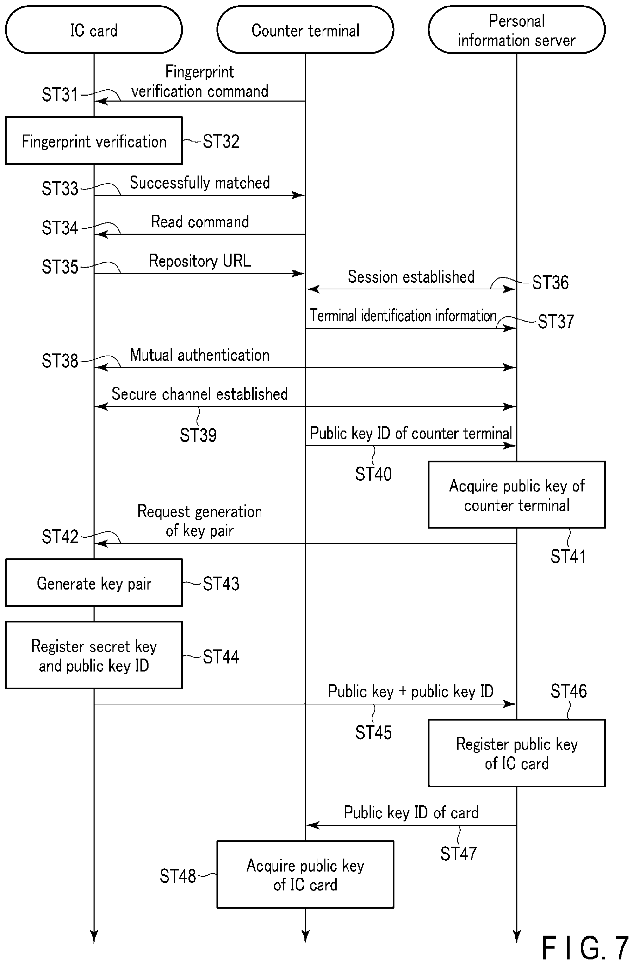

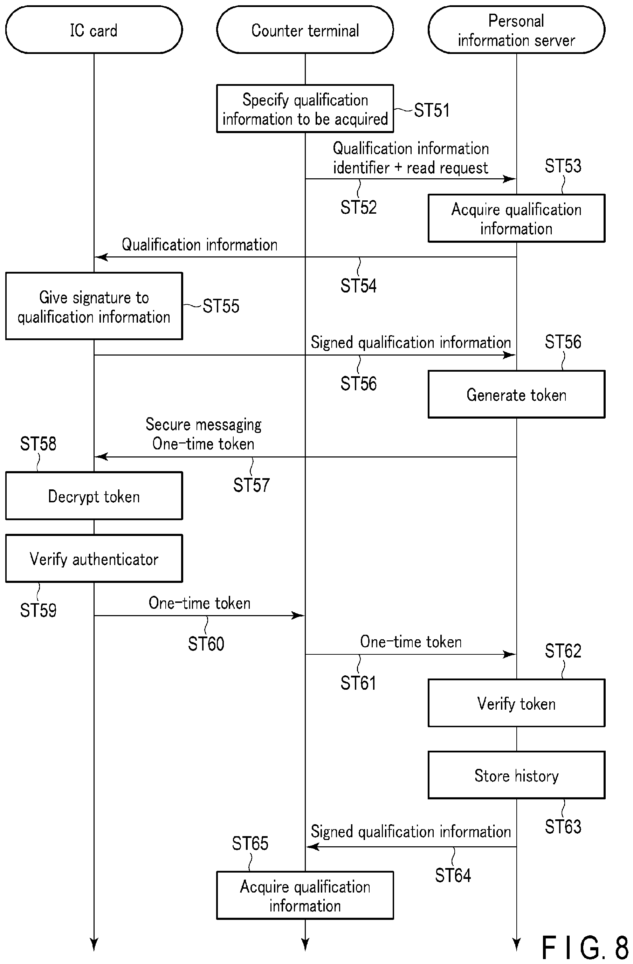

FIGS. 7 and 8 are sequence diagrams for explaining an operation example of an information providing process (reading process) for providing the counter terminal 5 with the qualification information of the holder of the IC card 2 held by the personal information server 4.

In the description of the operation example shown in FIGS. 7 and 8, it is assumed that the holder of the IC card 2 presents the qualification information necessary for starting a service and stored in the personal information server 4 to the counter terminal 5 operated by a clerk at a counter of a service provider. As a specific example, it is assumed that if the holder of the IC card 2 opens an account in a financial institution, the holder of the IC card 2 presents the qualification information necessary for opening the account and stored in the personal information server 4 to the counter terminal 5 operated by a clerk of the financial institution.

A clerk at the counter who accepts the procedure for starting the service inputs an instruction to start the procedure for starting the service to an operation unit (not shown) of the counter terminal 5 in response to a request from the user, and presents the IC card 2 as an authentication device held by the user to an IC card interface (not shown) of the counter terminal 5. When the user presents the IC card 2 to the counter terminal 5, the counter terminal 5 provides a fingerprint verification command to the IC card 2 (ST31).

The IC card 2 receives the fingerprint verification command from the counter terminal 5 through the communication interface 25. When the IC card 2 receives the fingerprint verification command, the processor 21 of the IC card 2 reads a fingerprint using the fingerprint sensor 20, and executes fingerprint verification for verifying the fingerprint read by the fingerprint sensor 20 with the fingerprint of the holder held in the storage area 24a (ST32).

When the processor 21 of the IC card 2 executes the fingerprint verification in response to the fingerprint verification command, the processor 21 transmits the result of the fingerprint verification to the counter terminal 5. Here, it is assumed that the fingerprint verification in the IC card 2 is successful. When the fingerprint verification is successful, the processor 21 notifies the counter terminal 5 of the successful fingerprint verification as a response to the fingerprint verification command (ST33).

When the counter terminal 5 receives the notification that the fingerprint verification is successful from the IC card 2, the counter terminal 5 displays the success of the fingerprint verification on a display (not shown) of the counter terminal 5. Thus, the clerk who operates the counter terminal 5 confirms that the person who presents the IC card 2 is the holder of the IC card 2. After confirming that the person who presents the IC card 2 is the holder of the IC card 2, the clerk instructs the operation unit of the counter terminal 5 to acquire the information indicating a storage location (repository) of the information on the holder of the IC card 2. The counter terminal 5 provides a read command for requesting the reading of the information indicating the repository of the holder (herein, the URL of the repository) to the IC card 2 in response to the operation instruction (ST34).

The IC card 2 receives the read command requesting the reading of the URL of the repository from the counter terminal 5 through the communication interface 25. When the IC card 2 receives the read command, the processor 21 of the IC card 2 reads, from the data memory 24, the URL of the repository specified to be read by the command. The processor 21 generates response data to the read command, in which the URL of the repository read from the data memory 24 is set, and transmits the generated response data to the counter terminal 5 (ST35).

When the counter terminal 5 receives the response data including the URL of the repository from the IC card 2, the counter terminal 5 accesses the URL of the repository acquired from the IC card 2. As a result, the personal information server 4 as the repository of the holder of the IC card 2 and the counter terminal 5 start communication via the network.

The processor 41 of the personal information server 4 receives the access from the counter terminal 5 via the communication unit 45 and establishes a session with the counter terminal 5 (ST36). When the processor 41 of the personal information server 4 establishes a session with the counter terminal 5, the processor 41 receives terminal identification information for identifying the counter terminal 5 from the counter terminal 5 (ST37).

When the processor 41 of the personal information server 4 receives the terminal identification information of the counter terminal 5, the processor 41 executes mutual authentication with the IC card 2 connected to the counter terminal 5 specified by the received terminal identification information (ST38). The personal information server 4 and the IC card 2 perform mutual authentication for authenticating each other by communicating with each other via the network and the counter terminal 5. When the mutual authentication is successful, the processor 41 of the personal information server 4 and the processor 21 of the IC card 2 establish a secure channel via the counter terminal 5 (ST39).

When the processor 41 of the personal information server 4 establishes a secure channel with the IC card 2, the processor 41 acquires a public key ID indicating a public key of the counter terminal 5 from the counter terminal 5 (ST40). When the processor 41 of the personal information server 4 acquires the public key ID of the counter terminal 5, the processor 41 acquires the public key of the counter terminal 5 indicated by the public key ID (ST41). When the processor 41 of the personal information server 4 acquires the public key of the counter terminal 5, the processor 41 transmits a command for requesting the generation of a key pair to the IC card 2 (ST42).

The IC card 2 receives the command for requesting the generation of a key pair from the personal information server 4 through the communication interface 25 via the counter terminal 5. If the IC card 2 receives the command for requesting the generation of a key pair from the personal information server 4, the processor 21 of the IC card 2 generates a key pair consisting of a secret key and a public key (ST43). When the processor 21 generates the key pair, the processor 21 stores the generated secret key and the public key ID indicating the public key in the data memory 24 (ST44).

The processor 21 stores at least the secret key in a secure memory area of the data memory 24. After storing the secret key and the public key ID, the processor 41 of the IC card 2 transmits the public key and the public key ID to the personal information server 4 through secure communication with the personal information server 4 via the counter terminal 5 (ST45).

The personal information server 4 receives the public key and the public key ID from the IC card 2 via the counter terminal 5. The processor 41 of the personal information server 4 stores the public key received from the IC card 2 in the data memory 44 (ST46). When the processor 41 of the personal information server 4 stores the public key of the IC card 2, the processor 41 transmits the public key ID indicating the public key of the IC card 2 to the counter terminal 5 through the communication unit 45 via the network (ST47).

The counter terminal 5 acquires the public key ID indicating the public key of the IC card 2 from the personal information server 4 (ST48). Thus, the counter terminal 5 can acquire the public key of the IC card 2 disclosed by the personal information server 4. In this state, the counter terminal 5 can acquire the information on the holder of the IC card 2 managed by the personal information server 4.

That is, after acquiring the public key ID of the IC card, the counter terminal 5 specifies the information (qualification information) to be acquired as information on the holder of the IC card 2 in order to start providing a service such as opening an account to the holder of the IC card 2 (ST51). For example, the counter terminal 5 displays the qualification information to be acquired on the display. The clerk at the counter verifies the qualification information to be acquired that is displayed on the display and instructs the acquisition of the qualification information through the operation unit. When the qualification information to be acquired is specified, the counter terminal 5 transmits, to the personal information server 4, a read request including identification information (a qualification information identifier) indicating the qualification information to be acquired (ST52).

The personal information server 4 receives the request for reading the qualification information of the holder of the IC card 2 from the counter terminal 5 through the communication unit 45 (ST53). When the personal information server 4 receives the request for reading the qualification information from the counter terminal 5, the processor 41 of the personal information server 4 acquires the qualification information requested to be read (ST53).

The processor 41 of the personal information server 4 specifies the qualification information to be read by the qualification information identifier included in the read request, and reads the specified qualification information from the information on the holder of the IC card 2 stored in the data memory 44. When the processor 41 reads the qualification information requested to be read, the processor 41 transmits the qualification information read from the data memory 44 to the IC card 2 with which the processor 41 has established the secure channel (ST54).

The IC card 2 receives the qualification information of the holder of the IC card 2 read from the data memory 44 by the personal information server 4 through secure communication with the personal information server 4. When the IC card 2 receives the qualification information from the personal information server 4, the processor 21 of the IC card 2 gives a digital signature to the received qualification information (ST55). The processor 21 uses the secret key stored in the data memory 24 in ST44 described above to give a digital signature to the qualification information received from the personal information server 4. After giving a signature to the qualification information from the personal information server 4, the processor 21 transmits, to the personal information server 4, the signed qualification information with the digital signature (ST56).

The personal information server 4 receives the qualification information signed by the IC card 2 through secure communication with the IC card 2. When the personal information server 4 receives the signed qualification information from the IC card 2, the processor 41 of the personal information server 4 stores the received signed qualification information in the RAM 43 or the data memory 44.

The processor 41 of the personal information server 4 issues a one-time token while holding the qualification information signed by the IC card 2 (ST56). When the processor 41 issues a one-time token, the processor 41 encrypts the one-time token and transmits the encrypted one-time token to the IC card 2 through secure messaging with the IC card 2 (ST57).

The IC card 2 receives the encrypted one-time token from the personal information server 4 via the counter terminal 5 through secure messaging. When the IC card 2 receives the encrypted token through secure messaging from the personal information server 4, the processor 21 of the IC card 2 decrypts the received data to acquire the one-time token (ST58). The processor 21 also verifies the authenticator of the secure messaging from the personal information server (ST59).

After verifying the authenticator of the secure messaging from the personal information server 4, the processor 21 of the IC card 2 supplies the counter terminal 5 with the token (one-time token) acquired from the personal information server 4 (ST60).

The counter terminal 5 acquires the one-time token decrypted by the IC card 2 from the IC card 2 connected to the card interface. The counter terminal 5 transmits the one-time token acquired from the IC card 2 to the personal information server 4 (ST61). The one-time token is data that is issued, encrypted, and transmitted by the personal information server 4 to the IC card 2. After the one-time token encrypted by the personal information server 4 is decrypted using the IC card 2, the counter terminal 5 acquires the decrypted one-time token. Thus, if the encryption by the personal information server 4 and the decryption by the IC card 2 are executed normally, the one-time token transmitted from the counter terminal 5 to the personal information server 4 matches the one-time token originally generated by the personal information server 4.

The personal information server 4 transmits the encrypted one-time token to the IC card 2 through secure messaging, and then receives the one-time token (challenge data of the one-time token) from the counter terminal 5. When the personal information server 4 receives the one-time token from the counter terminal 5, the processor 41 of the personal information server 4 verifies whether the one-time token received from the counter terminal 5 matches the one-time token issued by the personal information server 4 and transmitted to the IC card 2 through secure messaging (ST62).

If the token received from the counter terminal 5 matches the one-time token issued by the processor 41 of the personal information server 4, the processor 41 stores, in the data memory 44, history information indicating that the qualification information is provided to the counter terminal 5 (ST63), and transmits the qualification information signed by the IC card 2 and stored in the RAM or the like to the counter terminal 5 (ST64).

The counter terminal 5 transmits the one-time token received from the IC card 2 to the personal information server 4, and then receives the qualification information signed by the IC card 2 from the personal information server 4. When the counter terminal 5 receives the qualification information signed by the IC card 2 from the personal information server 4, the counter terminal 5 acquires the public key of the IC card 2 using the public key ID acquired from the personal information server 4 in ST48. The counter terminal 5 acquires the qualification information of the holder of the IC card 2 by decrypting the qualification information signed by the IC card 2 using the public key of the IC card 2 (ST65).

According to the above process, by connecting the IC card held by the user to the counter terminal and performing fingerprint authentication, it is possible to provide the information on the holder of the IC card stored in the personal information server to the counter terminal. Thus, the user can provide information such as the qualification information of the user stored in the personal information server to the counter terminal by simply performing fingerprint authentication using the IC card without performing complicated operations, and can perform operations such as displaying the qualification information of the user on the display of the counter terminal.

According to the embodiment described above, the personal information server transmits, to the IC card, the qualification information of the holder of the IC card requested from the counter terminal after the holder of the IC card is verified by the fingerprint authentication. The IC card transmits, to the personal information server, signed qualification information obtained by digitally signing the qualification information received from the personal information server. The personal information server provides the counter terminal with the qualification information signed by the IC card and acquired from the IC card. The counter terminal receives the qualification information signed by the IC card from the personal information server and acquires the qualification information using the public key of the IC card. That is, the information management system according to the embodiment can provide the counter terminal with the qualification information stored in the personal information server after digitally signing the qualification information using the IC card whose holder has been identified by the biometric authentication, and can safely provide the counter terminal with the qualification information stored in the personal information server.

Also, according to the embodiment described above, the personal information server issues a one-time token and transmits the issued one-time token to the IC card through secure messaging. The IC card decrypts the one-time token received from the personal information server through secure messaging, and transmits the decrypted one-time token to the counter terminal. The counter terminal transmits the one-time token decrypted by the IC card to the personal information server. The personal information server provides the information on the holder of the IC card to the counter terminal if the one-time token received from the counter terminal is correct. Thus, the information stored in the personal information server can be provided to the counter terminal after it is confirmed that the one-time token transmitted by the counter terminal is a valid one-time token obtained via the IC card whose holder has been identified by the biometric authentication.

Next, an information providing process for providing information held by the personal information server 4 using the IC card 2 in the information management system according to an embodiment will be described.

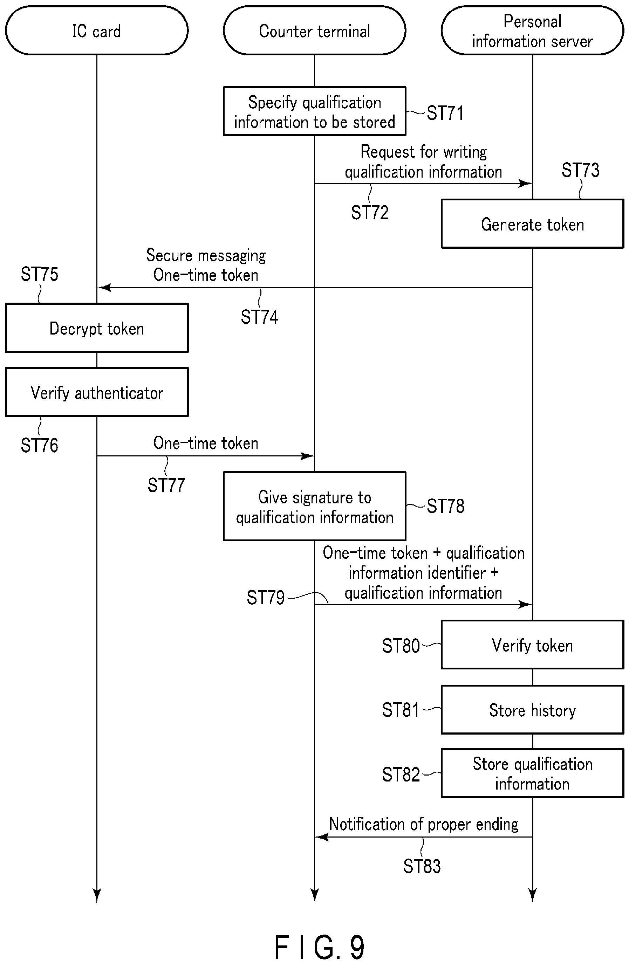

FIG. 9 is a sequence diagram for explaining an operation example of a storing process for storing the qualification information from the counter terminal 5 as the qualification information of the holder of the IC card 2 held by the personal information server 4.

The operation example shown in FIG. 9 assumes a process of registering (writing) new information on the holder of the IC card 2 in the personal information server 4 using the counter terminal 5. A specific example assumes a process of registering new qualification information acquired by the holder of the IC card 2 using the counter terminal 5 in the personal information server 4 as the repository of the holder of the IC card 2.

The process shown in FIG. 9 is performed after the above-described process shown in FIG. 7. That is, the IC card 2 held by the user who registers the qualification information in the personal information server 4 is connected to the counter terminal 5. The counter terminal 5 and the IC card 2 perform the same process as the process of ST31 to 35 shown in FIG. 7. Thus, after the IC card 2 verifies the holder of the IC card 2 through fingerprint verification, the counter terminal 5 acquires the URL of the repository of the holder.

The counter terminal 5 and the personal information server 4 indicated by the URL of the repository establish a communication session through the same procedure as the procedure of ST36 shown in FIG. 7, and the personal information server 4 acquires the terminal identification information of the counter terminal 5 through the same procedure as the procedure of ST36 shown in FIG. 7.

The IC card 2 and the personal information server 4 further establish a secure channel by performing mutual authentication through the same process as the process of ST38 to ST37 shown in FIG. 7. As a result, the IC card 2 and the personal information server 4 are in a state of being able to perform secure messaging that enables transmission and reception of data that is not decrypted by external devices including the counter terminal 5.

The personal information server 4 acquires the public key of the counter terminal 5 through the same process as the process of ST40 to ST41 shown in FIG. 7.

Further, through the same process as the process of ST40 to ST41 shown in FIG. 7, the IC card 2, which has established a secure channel with the personal information server 4, generates a key pair in response to a request from the personal information server 4 and stores a secret key. The public key of the card 2 is registered in the personal information server 4 and the counter terminal 5.

After the counter terminal 5 acquires the public key of the IC card 2, the qualification information to be registered (stored) (the information to be written) in the personal information server 4, which is the repository of the holder of the IC card 2, is specified to the counter terminal 5 (ST71). Herein, it is assumed that the counter terminal 5 is in a state of holding new qualification information of the holder of the IC card 2 to be registered in the personal information server 4.

For example, the counter terminal 5 displays the qualification information to be registered (stored) in the personal information server 4, which is the repository of the holder of the IC card 2, on the display. The clerk at the counter verifies the qualification information to be registered in the repository that is displayed on the display, and instructs the storage of the qualification information through the operation unit. When the qualification information to be registered in the repository is specified, the counter terminal 5 transmits a request for writing the qualification information to be registered (write information) to the personal information server 4 (ST72).

The personal information server 4 receives the request for writing the qualification information as the information on the holder of the IC card 2 from the counter terminal 5 through the communication unit 45. When the personal information server 4 receives the request for writing the qualification information from the counter terminal 5, the processor 41 of the personal information server 4 issues a one-time token (ST73). When the processor 41 issues a one-time token, the processor 41 encrypts the one-time token and transmits the encrypted one-time token to the IC card 2 through the secure messaging with the IC card 2 (ST74).

The IC card 2 receives the encrypted one-time token from the personal information server 4 through secure messaging. When the processor 21 of the IC card 2 receives data including the encrypted one-time token from the personal information server 4 through secure messaging, the processor 21 decrypts the encrypted one-time token included in the received data (ST75). The processor 21 also verifies the authenticator of the secure messaging from the personal information server 4 (ST76).

After verifying the authenticator of the secure messaging from the personal information server 4, the processor 21 of the IC card 2 supplies the counter terminal 5 with the decrypted one-time token included in the data received from the personal information server 4 (ST77).

The counter terminal 5 receives the one-time token decrypted by the IC card 2 from the IC card 2 connected to the card interface. When the counter terminal 5 receives the one-time token from the IC card 2, the counter terminal 5 gives a signature to the qualification information to be registered (stored) as the information on the holder of the IC card 2 in the personal information server 4 as the repository (ST78). The counter terminal 5 holds a secret key corresponding to the public key reported to the personal information server 4, and uses the secret key to give a digital signature to the qualification information to be stored in the personal information server 4.

If the counter terminal 5 digitally signs the qualification information to be registered using its own secret key, the counter terminal 5 transmits, to the personal information server 4, data including the one-time token (challenge data of the one-time token) acquired from the IC card 2, the qualification information identifier for identifying the qualification information, and the signed qualification information (ST79).

After transmitting the one-time token to the IC card 2 through secure messaging, the personal information server 4 receives data including the one-time token, the signature information identifier, and the signed qualification information from the counter terminal 5. When the processor 41 of the personal information server 4 receives data including the one-time token from the counter terminal 5, the processor 41 verifies whether the one-time token received from the counter terminal 5 matches the one-time token issued by the personal information server 4 itself and transmitted to the IC card 2 through secure messaging (ST80).

If the one-time token received from the counter terminal 5 matches the one-time token issued by the processor 41 of the personal information server 4, the processor 41 stores, in the data memory 44, history information indicating that the qualification information requested to be registered by the counter terminal 5 is to be written (ST81). The processor 41 decrypts the signed qualification information received from the counter terminal 5 using the public key of the counter terminal 5, and writes the decrypted qualification information as the qualification information of the holder of the IC card 2 in the data memory 44 (ST82). After writing the qualification information (write information), the processor 41 notifies the counter terminal 5 that the qualification information requested to be registered has been properly written (ST83).

According to the above process, the IC card held by the user is connected to the counter terminal and fingerprint authentication is performed, whereby the counter terminal can write new information on the holder of the IC card in the personal information server. Thus, the user can store, in the personal information server, information such as his/her own new qualification information displayed on the display by the counter terminal by simply performing fingerprint authentication using the IC card without performing complicated operations.

According to the embodiment described above, after the holder of the IC card is verified by the fingerprint authentication, the counter terminal requests the personal information server indicated by the URL of the repository acquired from the IC card to write new qualification information (write information) of the holder of the IC card. The counter terminal digitally signs the qualification information to be registered in the personal information server by using its own secret key, and transmits the digitally signed qualification information to the personal information server. The personal information server writes the qualification information based on the signed qualification information received from the counter terminal as the information on the holder of the IC card by using the public key of the counter terminal. Thus, in the information management system according to the embodiment, the counter terminal to which the IC card whose holder has been identified by the biometric authentication is connected can safely supply the personal information server with information such as new qualification information to be stored as the information on the holder of the IC card, and can safely store the information in the personal information server.

Also, according to the embodiment described above, the personal information server that has received the request to write information from the counter terminal issues a one-time token and transmits the issued one-time token to the IC card through secure messaging. The IC card decrypts the one-time token received from the personal information server through secure messaging, and transmits the decrypted one-time token to the counter terminal. The counter terminal transmits the one-time token from the IC card and the qualification information to be registered (write information) to the personal information server. The personal information server writes the qualification information requested to be written by the counter terminal as the information on the holder of the IC card if the one-time token received from the counter terminal is correct. Thus, the personal information server can write and store, in the personal information server, the write information that is requested to be written by the counter terminal after confirming that the one-time token from the counter terminal is a valid one-time token obtained via the IC card whose holder has been identified by the biometric authentication.

While several embodiments have been described, these embodiments have been presented by way of example and are not intended to limit the scope of the invention. The novel embodiments described herein can be implemented in a variety of other forms; furthermore, various omissions, substitutions, and changes can be made without departing from the spirit of the invention. The accompanying claims and their equivalents are intended to cover such forms or modifications as would fall within the scope and spirit of the inventions.

## Claims

1. An information management system comprising an authentication device and a personal information server,
the authentication device including:
a sensor configured to acquire biological information of a person;
a memory configured to store biological information of a holder;
an interface configured to connect to a terminal device; and
a first processor configured to output information indicating a location of the personal information server to the terminal device if a biometric verification between the biological information acquired by the sensor and the biological information stored in the memory is successful,
the personal information server including:
a communication unit configured to communicate with the terminal device;
a data memory configured to store personal information of a holder of the authentication device; and
a second processor configured to supply the personal information of the holder of the authentication device stored in the data memory to the terminal device in response to a request from the terminal device to which the authentication device is connected.

2. The information management system according to claim 1, wherein
the second processor of the personal information server issues a one-time token, transmits the one-time token to the authentication device through secure messaging, and then, if data received from the terminal device matches the issued one-time token, transmits the personal information to the terminal device, and
the first processor of the authentication device transmits, to the terminal device, the one-time token issued by the personal information server and obtained by decrypting the data received through the secure messaging from the personal information server.

3. The information management system according to claim 1, wherein
the first processor of the authentication device transmits, to the personal information server, signed personal information obtained by digitally signing the personal information of the holder received from the personal information server, and
the second processor of the personal information server discloses a public key of the authentication device acquired from the authentication device to the terminal device, and, in response to a request from the terminal device, transmits the personal information of the holder of the authentication device stored in the data memory, and then supplies the terminal device with the signed personal information, the signed personal information being personal information digitally signed by the authentication device.

4. The information management system according to claim 3, wherein
the first processor of the authentication device transmits, to the terminal device, a one-time token issued by the personal information server and obtained by decrypting data received through secure messaging from the personal information server, and
the second processor of the personal information server issues the one-time token, transmits the one-time token to the authentication device through secure messaging, and then, if challenge data of a one-time token received from the terminal device matches the issued one-time token, transmits the signed personal information to the terminal device.

5. The information management system according to any one of claims 1 to 4, wherein
the authentication device has a card-shaped main body, and
the sensor of the authentication device is a fingerprint sensor configured to read a fingerprint as biological information, and
the first processor of the authentication device outputs the information indicating the location of the personal information server to the terminal device if a fingerprint verification between fingerprint information acquired by the fingerprint sensor and fingerprint information stored in the memory is successful.

6. An authentication device comprising:
a sensor configured to acquire biological information of a person;
a memory configured to store biological information of a holder;
an interface configured to connect to a terminal device; and
a processor configured to output, to the terminal device, information indicating a location of a personal information server that stores personal information of the holder if a biometric verification between the biological information acquired by the sensor and the biological information stored in the memory is successful.

7. A personal information server comprising:
a communication unit configured to communicate with a terminal device to which an authentication device is connected, the authentication device performing a biometric verification on biological information acquired by a sensor and registered biological information of a holder;
a data memory configured to store personal information of a holder of the authentication device; and
a processor configured to supply the personal information of the holder of the authentication device stored in the data memory to the terminal device in response to a request from the terminal device if a biometric verification of the holder performed in the authentication device connected to the terminal device is successful.

8. An information management system comprising an authentication device and a personal information server,
the authentication device including:
a sensor configured to acquire biological information of a person;
a memory configured to store biological information of a holder;
an interface configured to connect to a terminal device; and
a first processor configured to output information indicating a location of the personal information server to the terminal device if a biometric verification between the biological information acquired by the sensor and the biological information stored in the memory is successful,
the personal information server including:
a communication unit configured to communicate with the terminal device;
a data memory configured to store personal information of a holder of the authentication device; and
a second processor configured to write write information supplied from the terminal device in the data memory as the personal information of the holder of the authentication device in response to a write request from the terminal device to which the authentication device is connected.

9. The information management system according to claim 8, wherein
the first processor of the authentication device transmits, to the terminal device, a one-time token issued by the personal information server and obtained by decrypting data received through secure messaging from the personal information server, and
the second processor of the personal information server issues the one-time token, transmits the one-time token to the authentication device through secure messaging, and then, if challenge data of a one-time token received from the terminal device matches the issued one-time token, writes the write information received from the terminal device in the data memory.

10. The information management system according to claim 8, wherein
the second processor of the personal information server acquires signed write information from the terminal device, verifies the signed write information using a public key of the terminal device, and then writes the write information in the data memory, the signed write information being the write information digitally signed by the terminal device.

11. The information management system according to claim 10, wherein
the first processor of the authentication device transmits, to the terminal device, a one-time token issued by the personal information server and obtained by decrypting data received through secure messaging from the personal information server, and
the second processor of the personal information server issues the one-time token, transmits the one-time token to the authentication device through secure messaging, then, if challenge data of a one-time token received from the terminal device matches the issued one-time token, verifies the signed write information received from the terminal device using a public key of the terminal device, and then writes the write information in the data memory.

12. The information management system according to any one of claims 8 to 11, wherein
the authentication device has a card-shaped main body, and
the sensor of the authentication device is a fingerprint sensor configured to read a fingerprint as biological information, and
the first processor of the authentication device outputs the information indicating the location of the personal information server to the terminal device if a fingerprint verification between fingerprint information acquired by the fingerprint sensor and fingerprint information stored in the memory is successful.

13. A personal information server comprising:
a communication unit configured to communicate with a terminal device to which an authentication device is connected, the authentication device performing a biometric verification on biological information acquired by a sensor and registered biological information of a holder;
a data memory configured to store personal information of a holder of the authentication device; and
a processor configured to write, if a biometric verification of the holder performed in the authentication device connected to the terminal device is successful, write information supplied from the terminal device in the data memory as the personal information of the holder of the authentication device in response to a write request from the terminal device.
